# EUROPEAN PATENT APPLICATION

(11) **EP 4 132 070 A1**
(43) Date of publication of application: **08.02.2023**
(21) Application number: 21774681.7
(22) Date of filing: 22.03.2021
(51) Int. Cl.: H04W 24/08

(54) **MEASUREMENT METHOD, TERMINAL APPARATUS, AND NETWORK SIDE APPARATUS**

(30) Priority: 24.03.2020 CN 202010214532
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Chas. Hude A/S
(86) International application number: PCT/CN2021/082062
(87) International publication number: WO 2021/190444

(57) **Abstract**

A measurement method, a terminal device, and a network side device are provided, where the method includes: in a case that a first serving frequency point of the terminal device is configured with at least two transmission points, controlling measurement on a measurement object or statistics on a measurement result of the measurement object based on a measurement parameter, where the measurement parameter includes at least one of a trigger condition parameter and a trigger condition; the trigger condition parameter includes a measurement threshold corresponding to a first transmission point of the first serving frequency point; and the trigger condition includes that a measurement result of a second transmission point of the first serving frequency point is less than or equal to a measurement threshold corresponding to the second transmission point.

## Description

### CROSS-REFERENCE TO RELATED APPLICATIONS

This application claims priority to Chinese Patent Application No. 202010214532.0 filed in China on March 24, 2020, which is incorporated herein by reference in its entirety.

### TECHNICAL FIELD

The present invention relates to the field of communications technologies, and in particular, to a measurement method, a terminal device, and a network side device.

### BACKGROUND

In an existing mobile communications system, a network side device may configure user equipment (User Equipment, UE) (also referred to as a terminal or a terminal device) to be measured in a serving cell, for example, one or more of reference signal received power (Reference Signal Received Power, RSRP) measurement, reference signal received quality (Reference Signal Received Quality, RSRQ) measurement, received signal strength indication (Received Signal Strength Indication, RSSI) measurement, and the like. In addition, the network side device may also configure trigger conditions for the UE to trigger other measurement objects (such as neighboring cells) to be measured or trigger measurement value statistics of other measurement objects. For example, in a case that a measurement result of a serving cell is less than a corresponding measurement threshold, measurement of other measurement objects is started or measurement value statistics of other measurement objects is started.

However, in the prior art, measurement management is often performed for a situation in which a transmission signal of a serving cell or a bandwidth part (Bandwidth Part, BWP) of the LTE usually originates from a transmission point (Transmission Point, TRP). In a case that a transmission signal of a serving cell or a BWP of the LTE originates from a plurality of transmission points, there is no relevant solution on how to perform measurement management.

### SUMMARY

Embodiments of the present invention provide a measurement method, a terminal device, and a network side device, so as to provide a measurement management method based on a granularity of the transmission point in a case that the transmission signal of a serving cell or a BWP of the UE originates from a plurality of transmission points. Further, the accuracy and flexibility of measurement management can be improved.

To resolve the foregoing technical problem, the embodiments of the present invention are implemented as follows:

According to a first aspect, an embodiment of the present invention provides a measurement method, where the method is applied to a terminal device and includes:
in a case that a first serving frequency point of the terminal device is configured with at least two transmission points, controlling measurement on a measurement object or statistics on a measurement result of the measurement object based on a measurement parameter, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

According to a second aspect, an embodiment of the present invention provides a measurement method, where the method is applied to a network side device and includes:
in a case that a first serving frequency point of a terminal device is configured with at least two transmission points, sending a measurement parameter to the terminal device, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

According to a third aspect, an embodiment of the present invention further provides a terminal device. The terminal device includes:
a control module, configured to: in a case that a first serving frequency point of the terminal device is configured with at least two transmission points, control measurement on a measurement object or statistics on a measurement result of the measurement object based on a measurement parameter, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point; and
the measurement object includes at least one of a neighboring serving frequency point of the first serving frequency point and a second serving frequency point, and the second serving frequency point includes a serving frequency point other than the first serving frequency point in the at least two serving frequency points of the terminal device.

According to a fourth aspect, an embodiment of the present invention further provides a network side device. The network side device includes:
a sending module, configured to: in a case that a first serving frequency point of a terminal device is configured with at least two transmission points, send a measurement parameter to the terminal device, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

According to a fifth aspect, an embodiment of the present invention further provides a terminal device, including a processor, a memory, and a computer program stored in the memory and executable on the processor, where when the computer program is executed by the processor, steps of the measurement method provided in the first aspect are implemented.

According to a sixth aspect, an embodiment of the present invention further provides a network side device, including a processor, a memory, and a computer program stored in the memory and executable on the processor, where when the computer program is executed by the processor, steps of the measurement method provided in the second aspect are implemented.

According to a seventh aspect, an embodiment of the present invention further provides a computer-readable storage medium, where the computer-readable storage medium stores a computer program, and when the computer program is executed by a processor, steps of the measurement method provided in the first aspect are implemented or steps of the measurement method provided in the second aspect are implemented.

According to an eighth aspect, an embodiment of the present invention further provides a computer program product stored in a computer-readable storage medium, where when the computer program product is executed by at least one processor, steps of the measurement method provided in the first aspect are implemented or steps of the measurement method provided in the second aspect are implemented.

According to a ninth aspect, an embodiment of the present invention further provides a terminal device, where the terminal device is configured to execute steps of the measurement method provided in the first aspect.

According to a tenth aspect, an embodiment of the present invention further provides a network side device, where the network side device is configured to execute steps of the measurement method provided in the second aspect.

In the embodiments of the present invention, in a case that a first serving frequency point of the terminal device is configured with at least two transmission points, measurement on a measurement object or statistics on a measurement result of the measurement object is controlled based on a measurement parameter, where the measurement parameter includes at least one of a trigger condition parameter and a trigger condition; the trigger condition parameter includes a measurement threshold corresponding to a first transmission point of the first serving frequency point; and the trigger condition includes that a measurement result of a second transmission point of the first serving frequency point is less than or equal to a measurement threshold corresponding to the second transmission point. Because in a case that the transmission signal of a serving cell or a BWP of the terminal device originates from a plurality of transmission points, measurement management is performed based on a granularity of the transmission point. Compared with performing measurement management based on a granularity of the cell or the BWP, the accuracy and flexibility of measurement management can be improved.

### BRIEF DESCRIPTION OF DRAWINGS

To describe the technical solutions of the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a carrier aggregation architecture according to an embodiment of the present invention;
FIG. 2 is a structural diagram of a network system to which the embodiments of the present invention can be applied;
FIG. 3 is a flowchart of a measurement method according to an embodiment of the present invention;
FIG. 4 is a flowchart of another measurement method according to an embodiment of the present invention;
FIG. 5 is a structural diagram of a terminal device according to an embodiment of the present invention;
FIG. 6 is a structural diagram of a network side device according to an embodiment of the present invention;
FIG. 7 is a structural diagram of another terminal device according to an embodiment of the present invention; and
FIG. 8 is a structural diagram of another network side device according to an embodiment of the present invention.

### DETAILED DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

In the specification and claims of this application, the terms such as "first" and "second" are used for distinguishing similar objects, and are not necessarily used to describe a particular order or sequence. It should be understood that the data termed in such a way is interchangeable in proper circumstances so that the embodiments of this application described herein can be implemented, for example, in an order other than the order illustrated or described herein. In addition, terms "include", "have", and any variants thereof are intended to cover non-exclusive inclusion, for example, processes, methods, systems, products, or devices that contain a series of steps or units are not necessarily limited to those steps or units that are clearly listed, but may include other steps or units that are not clearly listed or are inherent to these processes, methods, products, or devices. In addition, in the specification and claims, "and/or" is used to indicate at least one of connected objects, for example, A and/or B and/or C, and to indicate seven cases: only A, only B, only C, A and B, B and C, A and C, and A, B and C.

For ease of understanding, the following describes some content in the embodiments of the present invention.

### Carrier aggregation (Carrier Aggregation, CA):

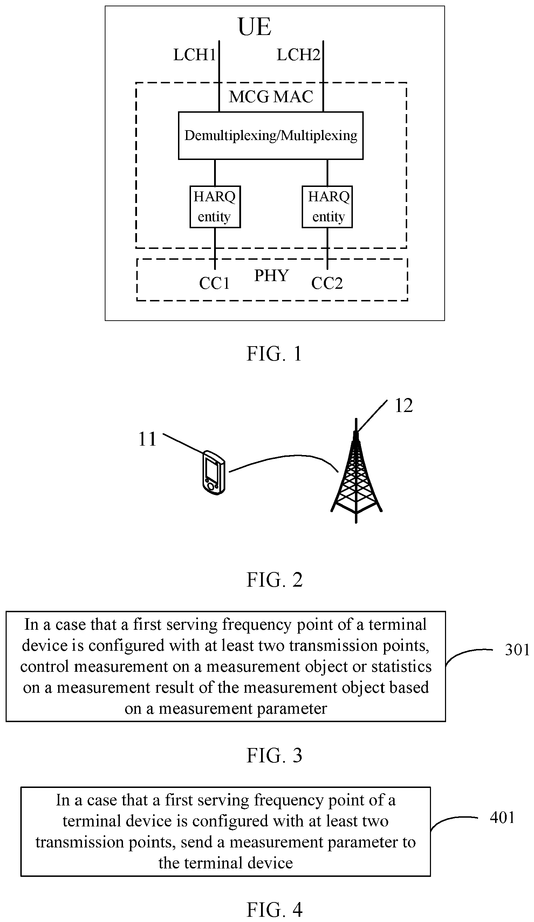

User equipment (User Equipment, UE), also referred to as a terminal or a terminal device, may be configured to be work on a plurality of different frequencies (that is, over carriers (Component Carrier, CC) with different absolute radio frequency channel numbers (Absolute Radio Frequency Channel Number, ARFCN)). The CA includes one primary cell (Primary Cell, PCell) and one or more secondary cells (Secondary Cell, SCell). Each carrier is a serving cell (Serving Cell), and is configured with a corresponding serving cell identifier (for example, servingCellId), and is corresponding to one hybrid automatic repeat request (Hybrid Automatic Repeat Request, HARQ) entity. The HARQ entity includes a plurality of HARQ processes (namely, HARQ process). For example, as shown in FIG. 1, two carriers: the CC1 and the CC2 are separately corresponding to one HARQ entity. Configuration of one serving cell includes common cell configuration (namely, common cell configuration) applicable to all LTEs in the cell and dedicated cell configuration (namely, dedicated cell configuration) only applicable to specific UE.

### Bandwidth part (Bandwidth Part, BWP):

For one serving cell, at most four BWPs may be configured at the network side, and the four BWPs are corresponding to different frequency ranges of operation. The network side may indicate an activated BWP by using downlink control information (Downlink Control Information, DCI). For one serving cell, the UE can only have one activated BWP at a same moment.

### Dual connectivity (Dual Connectivity, DC):

The LTE may establish connections to two cell groups (namely, a master cell group (Master Cell Group, MCG) and a secondary cell group (Secondary Cell Group, SCG)) at a time. The MCG includes a PCell and a SCell, and the SCG includes a primary secondary cell (Primary Secondary Cell, PSCell) and a SCell. Both the PCell and the PSCell may be referred to as special cells (Special Cell, SpCell).

### Measurement configuration (namely, s-MeasureConfig):

The network side device may configure user equipment (User Equipment, LTE) (also referred to as a terminal or a terminal device) to be measured in a serving cell, for example, one or more of reference signal received power (Reference Signal Received Power, RSRP) measurement, reference signal received quality (Reference Signal Received Quality, RSRQ) measurement, received signal strength indication (Received Signal Strength Indication, RSSI) measurement, and the like. In addition, the network side device may also configure configuration parameters (namely, s-MeasureConfig) such as trigger conditions for the UE to trigger other measurement objects (such as neighboring cells) to be measured or trigger measurement value statistics of other measurement objects.

For example, when the network side device is configured with s-MeasureConfig, if a measurement value of the RSRP of the SpCell is less than a measurement threshold configured in s-MeasureConfig, for example, ssb-RSRP or csi-RSRP, for the measurement of the configured measurement object, a behavior of the UE includes:
If the SpCell and other measurement objects use a same radio access technology (Radio Access Technology, RAT). For example, the SpCell uses the new radio (New Radio, NR), and other measurement objects also use the NR, the LTE counts measurement results of other measurement objects, for example, counting beam measurement results filtered by a layer 3, and counting measurement results of cells of other measurement objects; and
if the SpCell and other measurement objects use different RATs, for example, the SpCell uses the NR, and other measurement objects use the evolved UMTS Terrestrial Radio Access (Evolved Universal Terrestrial Radio Access, E-UTRA), the UE starts the measurement of other measurement objects.

An embodiment of the present invention provides a measurement method. Referring to FIG. 2, FIG. 2 is a structural diagram of a network system to which an embodiment of the present invention may be applied. As shown in FIG. 2, the network system includes a terminal device 11 and a network side device 12. The terminal device 11 may be a user side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), or a wearable device (Wearable Device). It should be noted that a specific type of the terminal device 11 is not limited in this embodiment of the present invention. The network side device 12 may be a base station, for example, a macro base station, an LTE eNB, a 1G NR NB, or a gNB. The network side device 12 may be alternatively a small cell, for example, a low power node (Low Power Node, LPN) pico or a femto, or the network side device 12 may be an access point (Access Point, AP). The base station may be alternatively a network node formed by a central unit (Central Unit, CU) and a plurality of TRPs that are managed and controlled by the CU. It should be noted that a specific type of the network side device 12 is not limited in the embodiments of the present invention.

An embodiment of the present invention provides a measurement method, applied to a terminal device. Referring to FIG. 3, FIG. 3 is a flowchart of a measurement method according to an embodiment of the present Invention. As shown in FIG. 3, the method includes the following steps.

Step 301. In a case that a first serving frequency point of the terminal device is configured with at least two transmission points, control measurement on a measurement object or statistics on a measurement result of the measurement object based on a measurement parameter.

The measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

In this embodiment, the first serving frequency point may include a first serving cell of the terminal device or a BWP of the first serving cell, where the first serving cell may be any serving cell of the terminal device. The at least two transmission points may be distinguished by using different physical identifiers of the transmission points, for example, by using a physical cell identifier (Physical Cell Identifier, PCI).

The measurement object may include at least one of a neighboring serving frequency point of the first serving frequency point and a second serving frequency point, and the second serving frequency point includes a serving frequency point other than the first serving frequency point in the at least two serving frequency points of the terminal device.

As for the neighboring serving frequency point of the first serving frequency point, in a case that the first serving frequency point is the first serving cell, the neighboring serving frequency point of the first serving frequency point may include at least one of a neighboring cell of the first serving cell, a BWP of the neighboring cell of the first serving cell, and a frequency point of the neighboring cell of the first serving cell; and in a case that the first serving frequency point is the first BWP of the first serving cell, the neighboring serving frequency point of the first serving frequency point may include at least one of a BWP other than the first BWP in the first serving cell, the neighboring cell of the first serving cell, a BWP of the neighboring cell of the first serving cell, and the frequency point of the neighboring cell of the first serving cell. The first BWP may be any BWP of the first serving cell.

The second serving frequency point may include a serving frequency point other than the first serving frequency point in serving frequency points of the terminal device. For example, if the serving cell of the terminal device includes the first serving cell and the second serving cell, and the first serving frequency point is the first serving cell, the second serving frequency point may include at least one of the second serving cell and the BWP of the second serving cell; and if the serving cell of the terminal device includes the first serving cell and the second serving cell, and the first serving frequency point is the first BWP of the first serving cell, the second serving frequency point may include at least one of a BWP other than the first BWP in the first serving cell, the second serving cell, the BWP of the second serving cell, and the frequency point of the second serving cell. The first BWP may be any BWP of the first serving cell.

It should be noted that, in a case that the terminal device is configured with only one serving frequency point, the measurement object may only include the neighboring serving frequency point of the first serving frequency point; and in a case that the terminal device is configured with a plurality of serving frequency points, the measurement object may include at least one of the neighboring serving frequency point of the first serving frequency point and the second serving frequency point.

The trigger condition parameter may include measurement thresholds corresponding to part or all of the transmission points (namely, the first transmission point) of the first serving frequency point. In a case that the first transmission point includes a plurality of transmission points of the first serving frequency point, the plurality of transmission points may be all corresponding to a same measurement threshold, or may also be corresponding to different measurement thresholds. The first transmission point may be predefined by a protocol, or may be configured by a network side device.

It should be noted that the measurement threshold corresponding to the transmission point may include a threshold or thresholds corresponding to one or more measurement indexes. For example, if the measurement indexes include reference signal receiving power (Reference Signal Receiving Power, RSRP) and reference signal received quality (Reference Signal Received Quality, RSRQ), the measurement threshold corresponding to the transmission point may include an RSRP threshold and an RSRQ threshold corresponding to the transmission point.

The trigger condition may include that measurement results of part or all of the transmission points (namely, the second transmission point) of the first serving frequency point are less than or equal to a corresponding measurement threshold. The measurement results may include, but are not limited to, a measurement result of at least one measurement index in the RSRP, the RSRQ, and received signal strength indication (Received Signal Strength Indication, RSSI).

It should be noted that, in a case that the measurement result of the second transmission point includes measurement results of a plurality of measurement indexes, that the measurement result of the second transmission point is less than or equal to the corresponding measurement threshold can be understood as that a measurement result of each measurement index of the second transmission point is less than or equal to the threshold of the corresponding measurement index. For example, in a case that the measurement result of the second transmission point includes an RSRP measurement result and an RSRQ measurement result, that the measurement result of the second transmission point is less than or equal to the corresponding measurement threshold may include that the RSRP measurement result is less than or equal to an RSRP threshold, and the RSRQ measurement result is less than or equal to the RSRQ threshold.

It should be noted that the second transmission point may be predefined by a protocol, or may be configured by a network side device. The first transmission point may be the same as the second transmission point; and the first transmission point may also be different from the second transmission point. For example, the first transmission point includes all transmission points of the first serving frequency point, and the second transmission point includes part of transmission points of the first serving frequency point.

As for the step 301, in a case that the measurement result of the second transmission point of the first serving frequency point is less than or equal to the measurement threshold corresponding to the second transmission point, the measurement on the measurement object or the statistics on the measurement result of the measurement object may be started, otherwise, the measurement on the measurement object or the statistics on the measurement result of the measurement object may not be performed.

In the embodiments of the present invention, in a case that a first serving frequency point of the terminal device is configured with at least two transmission points, measurement on a measurement object or statistics on a measurement result of the measurement object is controlled based on a measurement parameter, where the measurement parameter includes at least one of a trigger condition parameter and a trigger condition; the trigger condition parameter includes a measurement threshold corresponding to a first transmission point of the first serving frequency point; and the trigger condition includes that a measurement result of a second transmission point of the first serving frequency point is less than or equal to a measurement threshold corresponding to the second transmission point. Because in a case that the transmission signal of a serving cell or a BWP of the terminal device originates from a plurality of transmission points, measurement management is performed based on a granularity of the transmission point. Compared with performing measurement management based on a granularity of the cell or the BWP, the accuracy and flexibility of measurement management can be improved.

Optionally, all transmission points in the first transmission point are corresponding to a same measurement threshold;
or
there are at least two transmission points corresponding to different measurement thresholds in the first transmission point.

In an implementation, all transmission points in the first transmission point may be corresponding to a same measurement threshold, which is relatively easy to implement. For example, s-MeasureConfig (for example, ssb-RSRP and/or csi-RSRP) may be configured for a serving cell or a plurality of transmission points under the BWP, so that the measurement threshold may be used for the serving cell or all transmission points under the BWP.

In another implementation, part of or all of the transmission points in the first transmission point may be corresponding to different measurement thresholds, which can improve the flexibility of evaluating the measurement results of the transmission points. For example, the first transmission point includes a transmission point PCI-1, a transmission point PCI-2, and a transmission point PCI-3. The transmission point PCI-1 and the transmission point PCI-2 may be corresponding to different measurement thresholds, and the transmission point PCI-2 and the transmission point PCI-3 may be corresponding to a same measurement threshold.

Optionally, different transmission points in the first transmission point may be corresponding to different measurement thresholds. For example, if a PSCell or a PCell is configured with a transmission point PCI-1 and a transmission point PCI-2, the network side device may configure s-MeasureConfig-1 (for example, ssb-RSRP-1 and/or csi-RSRP-1) for the transmission point PCI-1, so as to evaluate measurement results of the transmission point PCI-1, and may configure s-MeasureConfig-2 (for example, ssb-RSRP-2 and/or csi-RSRP-2) for the transmission point PCI-2, so as to evaluate measurement results of the transmission point PCI-2.

Optionally, the second transmission point may include any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

Optionally, the foregoing trigger condition may include any one of the following:
Condition 1: A measurement result of any transmission point of the first serving frequency point is less than or equal to the corresponding measurement threshold.
   For example, the PSCell or the PCell is configured with 4 transmission points in total: a PCI-1, a PCI-2, a PCI-3, and a PCI-4, where an RSRP measurement result of the PCI-1, the PCI-2, the PCI-3, or the PCI-4 is lower than an RSRP threshold configured in s-MeasureConfig.
Condition 2: A measurement result of any transmission point in an active state or an operating state of the first serving frequency point is less than or equal to the corresponding measurement threshold.
   For example, the PSCell or the PCell is configured with 4 transmission points in total: a PCI-1, a PCI-2, a PCI-3, and a PCI-4, and the PCI-1 and the PCI-2 are active transmission points, where an RSRP measurement result of the PCI-1 or the PCI-2 is lower than an RSRP threshold configured in s-MeasureConfig.
Condition 3: A measurement result of a specific transmission point of the first serving frequency point is less than or equal to the corresponding measurement threshold.
   For example, the PSCell or the PCell is configured with 4 transmission points in total: a PCI-1, a PCI-2, a PCI-3, and a PCI-4, where if the PCI-1 is a master transmission point, a default transmission point, or an initial transmission point, an RSRP measurement result of the PCI-1 is lower than an RSRP threshold configured in s-MeasureConfig.
Condition 4: Measurement results of all transmission points of the first serving frequency point are less than or equal to the corresponding measurement threshold.
   For example, the PSCell or the PCell is configured with 4 transmission points in total: a PCI-1, a PCI-2, a PCI-3, and a PCI-4, where RSRP measurement results of the PCI-1, the PCI-2, the PCI-3, and the PCI-4 are all lower than an RSRP threshold configured in s-MeasureConfig.
Condition 5: Measurement results of all transmission points in an active state or an operating state of the first serving frequency point are less than or equal to the corresponding measurement threshold.
   For example, the PSCell or the PCell is configured with 4 transmission points in total: a PCI-1, a PCI-2, a PCI-3, and a PCI-4, and the PCI-1 and the PCI-2 are active transmission points, where RSRP measurement results of the PCI-1 and the PCI-2 are lower than an RSRP threshold configured in s-MeasureConfig.

Optionally, in a case that the second transmission point includes the specific transmission point of the first serving frequency point, the specific transmission point is predefined by a protocol or is configured by the network side device.

Optionally, in a case that the specific transmission point is predefined by the protocol, the specific transmission point includes a first-type transmission point in all the transmission points of the first serving frequency point, and the first-type transmission point includes at least one of a master transmission point, an initial transmission point, and a default transmission point.

In this embodiment, the master transmission point and the default transmission point may be configured by the network side device or predefined in a protocol. The initial transmission point may be a first transmission point to be activated or a first transmission point to perform information transmission in the plurality of transmission points of the serving frequency point.

Optionally, in a case that the first serving frequency point of the terminal device is configured with at least two transmission points, physical identifiers of different transmission points in the at least two transmission points are different, where
the physical identifier of the transmission point includes at least one of the following:
a physical identifier of a serving frequency point;
an identifier of a reference signal;
an identifier of a port number corresponding to a reference signal; and
an identifier of a resource location of a control channel.

In this embodiment, the physical identifier of a serving frequency point may include, but is not limited to, a physical cell identifier, for example, PCI-1.

The reference signal identifier may include, but is not limited to, at least one of a synchronous signal block (Synchronous Signal Block, SSB) identifier, a channel state information-reference signal (Channel State Information-Reference Signal, CSI-RS) identifier, and the like, for example, SSB-1, CSI-RS-1, and the like. Optionally, the reference signal identifier may be a reference signal identifier of a control channel, for example, an SSB identifier of the control channel or a CSI-RS identifier of the control channel.

The reference signal identifier may also be an identifier of a port number corresponding to the reference signal, for example, port_1. Optionally, the identifier of the port number corresponding to the reference signal may be an identifier of a port number corresponding to the reference signal of the control channel.

The identifier of the resource location of the control channel may include, but is not limited to, at least one of a control resource set (Control Resource Set, CORESET) identifier of a physical downlink control channel (Physical Downlink Control Channel, PDCCH) and a search space (namely, Search space) identifier.

Optionally, the method further includes:
receiving the measurement parameter from a network side device.

In this embodiment, the measurement parameters are configured by the network side device, so that the flexibility of measurement control can be improved.

Optionally, the controlling measurement on a measurement object or statistics on a measurement result of the measurement object based on a measurement parameter includes:
in a case that the trigger condition is satisfied, starting the measurement on the measurement object or the statistics on the measurement result of the measurement object.

In this embodiment, in a case that the measurement result of the second transmission point of the first serving frequency point is less than or equal to the measurement threshold corresponding to the second transmission point, and the first serving frequency point and the measurement object adopt a same RAT, statistics on the measurement result of the measurement object may be started; and in a case that the measurement result of the second transmission point of the first serving frequency point is less than or equal to the measurement threshold corresponding to the second transmission point, and the first serving frequency point and the measurement object adopt different RATs, the measurement on the measurement object may be started.

For example, the first serving frequency point is an SpCell, when the SpCell is an NR, the measurement object is also a frequency point or a cell of the NR, and in a case that the trigger condition is satisfied, the LTE counts, based on the measurement result, beam (for example, SSB -1) measurement results filtered by a layer 3, and counts measurement results of the cell (for example, cell-1) of the measurement object; and when the SpCell is the NR, and the measurement object is a frequency point or a cell of E-URTA, measurement on a corresponding frequency point or cell is started in a case that the trigger condition is satisfied.

Optionally, the first serving frequency point includes a first serving cell or a BWP of the first serving cell, where the first serving cell includes a primary cell or a primary secondary cell.

In this embodiment, in a case that the network side device configures a DC architecture for the terminal device, the first serving frequency point may include one of a primary cell, a BWP of the primary cell, a primary secondary cell, and a BWP of the primary secondary cell.

It can be learned from the foregoing description that, according to the measurement method provided in the embodiments of the present invention, when a transmission signal of a serving cell or a BWP originates from a plurality of transmission points, if measurement control is performed based on the granularity of the transmission point, measurement on the neighboring cell or the statistics on the measurement result can be triggered more reasonably, and further, this can improve the accuracy of measurement control and save power.

An embodiment of the present invention provides a measurement method, applied to a network side device. Referring to FIG. 4, FIG. 4 is a flowchart of another measurement method according to an embodiment of the present Invention. As shown in FIG. 4, the method includes the following steps.

Step 401. In a case that a first serving frequency point of a terminal device is configured with at least two transmission points, send a measurement parameter to the terminal device.

The measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

In this embodiment, the first serving frequency point may include a first serving cell of the terminal device or a BWP of the first serving cell, where the first serving cell may be any serving cell of the terminal device. The at least two transmission points may be distinguished by using different physical identifiers of the transmission points, for example, by using a PCI.

The trigger condition parameter may include measurement thresholds corresponding to part or all of the transmission points (namely, the first transmission point) of the first serving frequency point. In a case that the first transmission point includes a plurality of transmission points of the first serving frequency point, the plurality of transmission points may be all corresponding to a same measurement threshold, or may also be corresponding to different measurement thresholds. The first transmission point may be predefined by a protocol, or may be configured by a network side device.

It should be noted that the measurement threshold corresponding to the transmission point may include a threshold or thresholds corresponding to one or more measurement indexes. For example, if the measurement indexes include RSRP and RSRQ, the measurement threshold corresponding to the transmission point may include an RSRP threshold and an RSRQ threshold corresponding to the transmission point.

The trigger condition may include that measurement results of part or all of the transmission points (namely, the second transmission point) of the first serving frequency point are less than or equal to a corresponding measurement threshold. The measurement results may include, but are not limited to, a measurement result of at least one measurement index in the RSRP, the RSRQ, and the RSSI.

It should be noted that, in a case that the measurement result of the second transmission point includes measurement results of a plurality of measurement indexes, that the measurement result of the second transmission point is less than or equal to the corresponding measurement threshold can be understood as that a measurement result of each measurement index of the second transmission point is less than or equal to the threshold of the corresponding measurement index. For example, in a case that the measurement result of the second transmission point includes an RSRP measurement result and an RSRQ measurement result, that the measurement result of the second transmission point is less than or equal to the corresponding measurement threshold may include that the RSRP measurement result is less than or equal to an RSRP threshold, and the RSRQ measurement result is less than or equal to the RSRQ threshold.

It should be noted that the second transmission point may be predefined by a protocol, or may be configured by a network side device. The first transmission point may be the same as the second transmission point; and the first transmission point may also be different from the second transmission point. For example, the first transmission point includes all transmission points of the first serving frequency point, and the second transmission point includes part of transmission points of the first serving frequency point.

In this embodiment of the present invention, in a case of configuring at least two transmission points for the first serving frequency point of the terminal device, the network side device may configure at least one of the trigger condition parameter and the trigger condition for the terminal device. In this way, the terminal device may control measurement on a measurement object or statistics on a measurement result of the measurement object based on at least one of the trigger condition parameter and the trigger condition configured by the network side device. Because the measurement control is performed based on the granularity of the transmission point, the measurement on the measurement object or the statistics on the measurement result can be triggered more reasonably.

Optionally, all transmission points in the first transmission point are corresponding to a same measurement threshold;
or
there are at least two transmission points corresponding to different measurement thresholds in the first transmission point.

In an implementation, all transmission points in the first transmission point may be corresponding to a same measurement threshold, which is relatively easy to implement. For example, the network side device may configure s-MeasureConfig (for example, ssb-RSRP and/or csi-RSRP) for a serving cell or a plurality of transmission points under the BWP, so that the measurement threshold may be used for the serving cell or all transmission points under the BWP

In another implementation, part of or all of the transmission points in the first transmission point may be corresponding to different measurement thresholds, which can improve the flexibility of evaluating the measurement results of the transmission points. For example, the first transmission point includes a transmission point PCI-1, a transmission point PCI-2, and a transmission point PCI-3. The transmission point PCI-1 and the transmission point PCI-2 may be corresponding to different measurement thresholds, and the transmission point PCI-2 and the transmission point PCI-3 may be corresponding to a same measurement threshold.

Optionally, the second transmission point includes any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

Optionally, in a case that the second transmission point includes the specific transmission point of the first serving frequency point, the specific transmission point is configured by the network side device.

Optionally, in a case that the first serving frequency point of the terminal device is configured with at least two transmission points, physical identifiers of different transmission points in the at least two transmission points are different, where
the physical identifier of the transmission point includes at least one of the following:
a physical identifier of a serving frequency point;
an identifier of a reference signal;
an identifier of a port number corresponding to a reference signal; and
an identifier of a resource location of a control channel.

In this embodiment, the physical identifier of a serving frequency point may include, but is not limited to, a physical cell identifier, for example, PCI-1.

The reference signal identifier may include, but is not limited to, at least one of an SSB identifier, a CSI-RS identifier, and the like, for example, SSB-1, CSI-RS-1, and the like. Optionally, the reference signal identifier may be a reference signal identifier of a control channel, for example, an SSB identifier of the control channel or a CSI-RS identifier of the control channel.

The reference signal identifier may also be an identifier of a port number corresponding to the reference signal, for example, port_1. Optionally, the identifier of the port number corresponding to the reference signal may be an identifier of a port number corresponding to the reference signal of the control channel.

The identifier of the resource location of the control channel may include, but is not limited to, at least one of a CORESET identifier of the PDCCH and a search space identifier.

Optionally, the first serving frequency point includes a first serving cell or a bandwidth part (BWP) of the first serving cell, where the first serving cell includes a primary cell or a primary secondary cell.

In this embodiment, in a case that the network side device configures a DC architecture for the terminal device, the first serving frequency point may include one of a primary cell, a BWP of the primary cell, a primary secondary cell, and a BWP of the primary secondary cell.

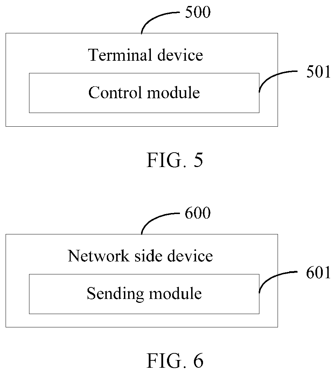

Referring to FIG. 5, FIG. 5 is a structural diagram of a terminal device according to an embodiment of the present invention. As shown in FIG. 5, a terminal device 500 includes:
a control module 501, configured to: in a case that a first serving frequency point of the terminal device is configured with at least two transmission points, control measurement on a measurement object or statistics on a measurement result of the measurement object based on a measurement parameter, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

Optionally, all transmission points in the first transmission point are corresponding to a same measurement threshold;
or
there are at least two transmission points corresponding to different measurement thresholds in the first transmission point.

Optionally, the second transmission point includes any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

Optionally, in a case that the second transmission point includes the specific transmission point of the first serving frequency point, the specific transmission point is predefined by a protocol or is configured by the network side device.

Optionally, in a case that the specific transmission point is predefined by the protocol, the specific transmission point includes a first-type transmission point in all the transmission points of the first serving frequency point, and the first-type transmission point includes at least one of a master transmission point, an initial transmission point, and a default transmission point.

Optionally, in a case that the first serving frequency point of the terminal device is configured with at least two transmission points, physical identifiers of different transmission points in the at least two transmission points are different, where
the physical identifier of the transmission point includes at least one of the following:
a physical identifier of a serving frequency point;
an identifier of a reference signal;
an identifier of a port number corresponding to a reference signal; and
an identifier of a resource location of a control channel.

Optionally, the terminal device further includes:
a receiving module, configured to receive the measurement parameter from a network side device.

Optionally, the control module is specifically configured to:
in a case that the trigger condition is satisfied, start the measurement on the measurement object or the statistics on the measurement result of the measurement object.

Optionally, the first serving frequency point includes a first serving cell or a bandwidth part (BWP) of the first serving cell, where the first serving cell includes a primary cell or a primary secondary cell.

The terminal device 500 provided in this embodiment of the present invention can implement the processes implemented by the terminal device in the foregoing method embodiment. To avoid repetition, details are not described herein again.

According to the terminal device 500 of the embodiments of the present invention, the control module 501 is configured to: in a case that a first serving frequency point of the terminal device is configured with at least two transmission points, control measurement on a measurement object or statistics on a measurement result of the measurement object based on a measurement parameter, where the measurement parameter includes at least one of a trigger condition parameter and a trigger condition; the trigger condition parameter includes a measurement threshold corresponding to a first transmission point of the first serving frequency point; and the trigger condition includes that a measurement result of a second transmission point of the first serving frequency point is less than or equal to a measurement threshold corresponding to the second transmission point. Because in a case that the transmission signal of a serving cell or a BWP of the terminal device originates from a plurality of transmission points, measurement management is performed based on a granularity of the transmission point. Compared with performing measurement management based on a granularity of the cell or the BWP, the accuracy and flexibility of measurement management can be improved.

Referring to FIG. 6, FIG. 6 is a structural diagram of a network side device according to an embodiment of the present invention. As shown in FIG. 6, the network side device 600 includes:
a sending module 601, configured to: in a case that a first serving frequency point of a terminal device is configured with at least two transmission points, send a measurement parameter to the terminal device, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

Optionally, all transmission points in the first transmission point are corresponding to a same measurement threshold;
or
there are at least two transmission points corresponding to different measurement thresholds in the first transmission point.

Optionally, the second transmission point includes any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

Optionally, in a case that the second transmission point includes the specific transmission point of the first serving frequency point, the specific transmission point is configured by the network side device.

Optionally, in a case that the first serving frequency point of the terminal device is configured with at least two transmission points, physical identifiers of different transmission points in the at least two transmission points are different, where
the physical identifier of the transmission point includes at least one of the following:
a physical identifier of a serving frequency point;
an identifier of a reference signal;
an identifier of a port number corresponding to a reference signal; and
an identifier of a resource location of a control channel.

Optionally, the first serving frequency point includes a first serving cell or a bandwidth part (BWP) of the first serving cell, where the first serving cell includes a primary cell or a primary secondary cell.

The network side device 600 provided in this embodiment of the present invention can implement the processes implemented by the network side device in the foregoing method embodiment. To avoid repetition, details are not described herein again.

According to the network side device 600 in the embodiments of the present invention, the sending module 601 is configured to: in a case that a first serving frequency point of a terminal device is configured with at least two transmission points, send a measurement parameter to the terminal device, where the measurement parameter includes at least one of a trigger condition parameter and a trigger condition; the trigger condition parameter includes a measurement threshold corresponding to a first transmission point of the first serving frequency point; and the trigger condition includes that a measurement result of a second transmission point of the first serving frequency point is less than or equal to a measurement threshold corresponding to the second transmission point. In this way, the terminal device may control measurement on a measurement object or statistics on a measurement result of the measurement object based on at least one of the trigger condition parameter and the trigger condition configured by the network side device. Because the measurement control is performed based on the granularity of the transmission point, the measurement on the measurement object or the statistics on the measurement result can be triggered more reasonably.

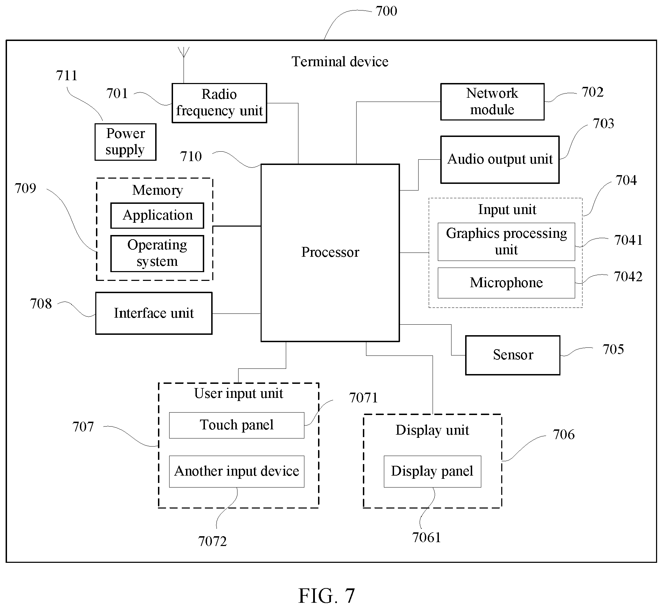

FIG. 7 is a structural diagram of another terminal device according to an embodiment of the present invention. Referring to FIG. 7, the terminal device 700 includes but is not limited to components such as a radio frequency unit 701, a network module 702, an audio output unit 703, an input unit 704, a sensor 705, a display unit 706, a user input unit 707, an interface unit 708, a memory 709, a processor 710, and a power supply 711. It can be understood by a person skilled in the art that, the terminal device structure shown in FIG. 7 does not constitute any limitation on the terminal device, and the terminal device may include more or fewer components than those shown in the figure, or combine some components, or have different component arrangements. In this embodiment of the present invention, the terminal device includes but is not limited to a mobile phone, a tablet computer, a notebook computer, a palmtop computer, an in-vehicle terminal, a wearable device, a pedometer, and the like.

The processor 710 is configured to: in a case that a first serving frequency point of the terminal device is configured with at least two transmission points, control measurement on a measurement object or statistics on a measurement result of the measurement object based on a measurement parameter, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

It should be understood that, in this embodiment of the present invention, the radio frequency unit 701 and the processor 710 can implement the processes implemented by the terminal device in the foregoing method embodiment. To avoid repetition, details are not described herein again.

It should be understood that, in this embodiment of the present invention, the radio frequency unit 701 may be configured to receive and send information or receive and send a signal in a call process. Specifically, after downlink data from a base station is received, the processor 710 processes the downlink data. In addition, uplink data is sent to the base station. Generally, the radio frequency unit 701 includes but is not limited to an antenna, at least one amplifier, a transceiver, a coupler, a low noise amplifier, a duplexer, and the like. In addition, the radio frequency unit 701 may communicate with a network and another device through a wireless communication system.

The terminal device provides wireless broadband Internet access for the user by using the network module 702, for example, helping the user to send and receive an e-mail, brows a web page, and access streaming media.

The audio output unit 703 may convert audio data received by the radio frequency unit 701 or the network module 702 or stored in the memory 709 into an audio signal and output the audio signal as a sound. In addition, the audio output unit 703 may further provide audio output (for example, call signal receiving sound or message receiving sound) related to a specific function performed by the terminal device 700. The audio output unit 703 includes a loudspeaker, a buzzer, a telephone receiver, and the like.

The input unit 704 is configured to receive an audio signal or a video signal. The input unit 704 may include a graphics processing unit (Graphics Processing Unit, GPU) 7041 and a microphone 7042. The graphics processing unit 7041 processes image data of a static image or video obtained by an image capture apparatus (for example, a camera) in a video capture mode or an image capture mode. A processed image frame may be displayed on the display unit 706. The image frame processed by the graphics processing unit 7041 may be stored in the memory 709 (or another storage medium) or sent by using the radio frequency unit 701 or the network module 702. The microphone 7042 may receive sound and can process such sound into audio data. The processed audio data may be converted in a call mode into a format that can be sent by the radio frequency unit 701 to a mobile communication base station for outputting.

The terminal device 700 further includes at least one sensor 705, such as an optical sensor, a motion sensor, and other sensors. Specifically, the light sensor includes an ambient light sensor and a proximity sensor. The ambient light sensor may adjust luminance of the display panel 7061 based on brightness of ambient light. The proximity sensor may turn off the display panel 7061 and/or backlight when the terminal device 700 is moved to an ear. As a type of the motion sensor, an accelerometer sensor may detect an acceleration value in each direction (generally, three axes), and detect a value and a direction of gravity when the accelerometer sensor is static, and may be used in an application for recognizing a posture of the terminal device (such as screen switching between landscape and portrait modes, a related game, or magnetometer posture calibration), a function related to vibration recognition (such as a pedometer or a knock), and the like. The sensor 705 may further include a fingerprint sensor, a pressure sensor, an iris sensor, a molecular sensor, a gyroscope, a barometer, a hygrometer, a thermometer, an infrared sensor, and the like. Details are not described herein.

The display unit 706 is configured to display information input by a user or information provided for a user. The display unit 706 may include a display panel 7061, and the display panel 7061 may be configured in a form of a liquid crystal display (Liquid Crystal Display, LCD), an organic light-emitting diode (Organic Light-Emitting Diode, OLED), or the like.

The user input unit 707 may be configured to receive input digit or character information, and generate a key signal input related to a user setting and function control of the terminal device. Specifically, the user input unit 707 includes a touch panel 7071 and another input device 7072. The touch panel 7071 is also referred to as a touchscreen, and may collect a touch operation performed by a user on or near the touch panel 7071 (for example, an operation performed by a user on the touch panel 7071 or near the touch panel 7071 by using any proper object or accessory, for example, a finger or a stylus). The touch panel 7071 may include two parts: a touch detection apparatus and a touch controller. The touch detection apparatus detects a touch location of the user, detects a signal brought by the touch operation, and sends the signal to the touch controller. The touch controller receives touch information from the touch detection apparatus, converts the touch information into touch point coordinates, sends the touch point coordinates to the processor 710, and receives and executes a command sent by the processor 710. In addition, the touch panel 7071 may be implemented in various types such as a resistor, a capacitor, an infrared ray, or a surface acoustic wave. The user input unit 707 may include other input devices 7072 in addition to the touch panel 7071. Specifically, the another input device 7072 may include but is not limited to: a physical keyboard, function keys (for example, a volume control key and an on/off key), a trackball, a mouse, or a joystick. Details are not described herein.

Further, the touch panel 7071 may cover the display panel 7061. After detecting the touch operation on or near the touch panel 7071, the touch panel 7071 transmits the touch operation to the processor 710 to determine a type of a touch event, and then the processor 710 provides corresponding visual output on the display panel 7061 based on the type of the touch event. In FIG. 7, although the touch panel 7071 and the display panel 7061 are used as two independent parts to implement input and output functions of the terminal device, in some embodiments, the touch panel 7071 and the display panel 7061 may be integrated to implement the input and output functions of the terminal device. This is not specifically limited herein.

The interface unit 708 is an interface for connecting an external apparatus to the terminal device 700. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 708 may be configured to receive input (for example, data information and power) from an external apparatus and transmit the received input to one or more elements in the terminal device 700 or may be configured to transmit data between the terminal device 700 and the external apparatus.

The memory 709 may be configured to store a software program and various data. The memory 709 may mainly include a program storage area and a data storage area. The program storage area may store an operating system, an application required by at least one function (for example, a sound play function or an image display function), and the like. The data storage area may store data (for example, audio data or an address book) or the like created based on use of a mobile phone. In addition, the memory 709 may include a high-speed random access memory, and may further include a nonvolatile memory, for example, at least one magnetic disk storage device, a flash storage device, or another volatile solid-state storage device.

The processor 710 is a control center of the terminal device, and connects all the components of the entire terminal device by using various interfaces and lines. By running or executing a software program and/or a module that are/is stored in the memory 709 and by invoking data stored in the memory 709, the processor 710 performs various functions of the terminal device and data processing, to perform overall monitoring on the terminal device. The processor 710 may include one or more processing units. Preferably, an application processor and a modem processor may be integrated into the processor 710. The application processor mainly processes an operating system, a user interface, an application, and the like. The modem processor mainly processes wireless communications. It can be understood that, alternatively, the modem processor may not be integrated into the processor 710.

The terminal device 700 may further include the power supply 711 (such as a battery) that supplies power to each component. Preferably, the power supply 711 may be logically connected to the processor 710 by using a power supply management system, so as to implement functions such as charging and discharging management, and power consumption management by using the power supply management system.

In addition, the terminal device 700 includes some function modules not shown. Details are not described herein.

Preferably, an embodiment of the present invention further provides a terminal device, including a processor 710, a memory 709, and a computer program stored in the memory 709 and executable on the processor 710. When the computer program is executed by the processor 710, processes of the measurement method embodiment are implemented and a same technical effect can be achieved. To avoid repetition, details are not described herein again.

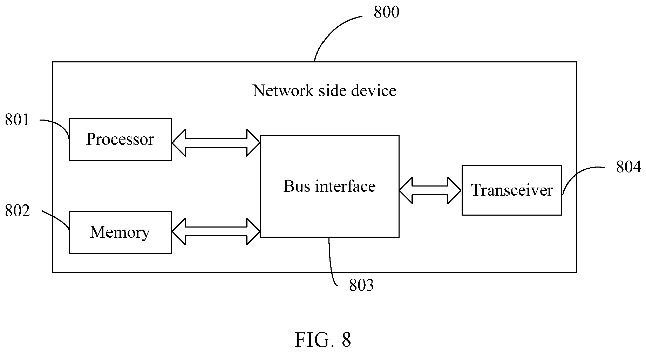

Referring to FIG. 8, FIG. 8 is a structural diagram of another network side device according to an embodiment of the present invention. As shown in FIG. 8, a network side device 800 includes a processor 801, a memory 802, a bus interface 803, and a transceiver 804, where the processor 801, the memory 802, and the transceiver 804 are all connected to the bus interface 803.

In this embodiment of the present invention, the network side device 800 further includes a computer program that is stored in the memory 802 and that can be run on the processor 801.

In this embodiment of the present invention, the transceiver 804 is configured to:
in a case that a first serving frequency point of a terminal device is configured with at least two transmission points, send a measurement parameter to the terminal device, where
the measurement parameter includes at least one of a trigger condition parameter and a trigger condition; the trigger condition parameter includes a measurement threshold corresponding to a first transmission point of the first serving frequency point, and the first transmission point includes part or all of transmission points of the first serving frequency point; and the trigger condition includes that a measurement result of a second transmission point of the first serving frequency point is less than or equal to a measurement threshold corresponding to the second transmission point, and the second transmission point includes part or all of the transmission points of the first serving frequency point.

It should be understood that, in this embodiment of the present invention, the processor 801 and the transceiver 804 can implement the processes implemented by the network side device in the foregoing method embodiment. To avoid repetition, details are not described herein again.

An embodiment of the present invention further provides a computer-readable storage medium. The computer-readable storage medium stores a computer program, and when the computer program is executed by a processor, processes of the measurement method embodiment are implemented and a same technical effect can be achieved. To avoid repetition, details are not described herein again. The computer-readable storage medium includes a read-only memory (Read-Only Memory, ROM for short), a random access memory (Random Access Memory, RAM for short), a magnetic disk, an optical disc, or the like.

It should be noted that, in this specification, the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more restrictions, an element defined by the statement "including a..." does not exclude another same element in this process, method, article, or apparatus that includes the element.

By means of the foregoing description of the embodiments, a person skilled in the art may clearly understand that the method in the foregoing embodiments may be implemented by software in addition to a necessary universal hardware platform. Certainly, the method in the foregoing embodiments may also be implemented by hardware. However, in many cases, the former is a preferred embodiment. Based on such an understanding, the technical solutions of the present invention essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to execute the methods described in the embodiments of the present invention.

The embodiments of the present invention are described above with reference to the accompanying drawings, but the present invention is not limited to the foregoing specific implementation manners. The foregoing specific implementation manners are merely exemplary instead of restrictive. Under enlightenment of the present invention, a person of ordinary skill in the art may make many forms without departing from the objective of the present invention and the protection scope of claims, all of which fall within the protection of the present invention.

## Claims

1. A measurement method, applied to a terminal device and comprising:
in a case that a first serving frequency point of the terminal device is configured with at least two transmission points, controlling measurement on a measurement object or statistics on a measurement result of the measurement object based on a measurement parameter, wherein
the measurement parameter comprises at least one of a trigger condition parameter and a trigger condition; the trigger condition parameter comprises a measurement threshold corresponding to a first transmission point of the first serving frequency point, and the first transmission point comprises part or all of transmission points of the first serving frequency point; and the trigger condition comprises that a measurement result of a second transmission point of the first serving frequency point is less than or equal to a measurement threshold corresponding to the second transmission point, and the second transmission point comprises part or all of the transmission points of the first serving frequency point.

2. The method according to claim 1, wherein all transmission points in the first transmission point are corresponding to a same measurement threshold;
or
there are at least two transmission points corresponding to different measurement thresholds in the first transmission point.

3. The method according to claim 1, wherein the second transmission point comprises any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

4. The method according to claim 3, wherein in a case that the second transmission point comprises the specific transmission point of the first serving frequency point, the specific transmission point is predefined by a protocol or configured by a network side device.

5. The method according to claim 4, wherein in a case that the specific transmission point is predefined by the protocol, the specific transmission point comprises a first-type transmission point in all the transmission points of the first serving frequency point, and the first-type transmission point comprises at least one of a master transmission point, an initial transmission point, and a default transmission point.

6. The method according to claim 1, wherein in a case that the first serving frequency point of the terminal device is configured with at least two transmission points, physical identifiers of different transmission points in the at least two transmission points are different, wherein
the physical identifier of the transmission point comprises at least one of the following:
a physical identifier of a serving frequency point;
an identifier of a reference signal;
an identifier of a port number corresponding to a reference signal; and
an identifier of a resource location of a control channel.

7. The method according to claim 1, further comprising:
receiving the measurement parameter from a network side device.

8. The method according to claim 1, wherein the controlling measurement on a measurement object or statistics on a measurement result of the measurement object based on a measurement parameter comprises:
in a case that the trigger condition is satisfied, starting the measurement on the measurement object or the statistics on the measurement result of the measurement object.

9. The method according to claim 1, wherein the first serving frequency point comprises a first serving cell or a bandwidth part (BWP) of the first serving cell, wherein the first serving cell comprises a primary cell or a primary secondary cell.

10. A measurement method, applied to a network side device and comprising:
in a case that a first serving frequency point of a terminal device is configured with at least two transmission points, sending a measurement parameter to the terminal device, wherein
the measurement parameter comprises at least one of a trigger condition parameter and a trigger condition; the trigger condition parameter comprises a measurement threshold corresponding to a first transmission point of the first serving frequency point, and the first transmission point comprises part or all of transmission points of the first serving frequency point; and the trigger condition comprises that a measurement result of a second transmission point of the first serving frequency point is less than or equal to a measurement threshold corresponding to the second transmission point, and the second transmission point comprises part or all of the transmission points of the first serving frequency point.

11. The method according to claim 10, wherein all transmission points in the first transmission point are corresponding to a same measurement threshold;
or
there are at least two transmission points corresponding to different measurement thresholds in the first transmission point.

12. The method according to claim 10, wherein the second transmission point comprises any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

13. The method according to claim 12, wherein in a case that the second transmission point comprises the specific transmission point of the first serving frequency point, the specific transmission point is configured by the network side device.

14. The method according to claim 10, wherein in a case that the first serving frequency point of the terminal device is configured with at least two transmission points, physical identifiers of different transmission points in the at least two transmission points are different, wherein
the physical identifier of the transmission point comprises at least one of the following:
a physical identifier of a serving frequency point;
an identifier of a reference signal;
an identifier of a port number corresponding to a reference signal; and
an identifier of a resource location of a control channel.

15. The method according to claim 10, wherein the first serving frequency point comprises a first serving cell or a bandwidth part (BWP) of the first serving cell, wherein the first serving cell comprises a primary cell or a primary secondary cell.

16. A terminal device, comprising:
a control module, configured to: in a case that a first serving frequency point of the terminal device is configured with at least two transmission points, control measurement on a measurement object or statistics on a measurement result of the measurement object based on a measurement parameter, wherein
the measurement parameter comprises at least one of a trigger condition parameter and a trigger condition; the trigger condition parameter comprises a measurement threshold corresponding to a first transmission point of the first serving frequency point, and the first transmission point comprises part or all of transmission points of the first serving frequency point; and the trigger condition comprises that a measurement result of a second transmission point of the first serving frequency point is less than or equal to a measurement threshold corresponding to the second transmission point, and the second transmission point comprises part or all of the transmission points of the first serving frequency point.

17. The terminal device according to claim 16, wherein all transmission points in the first transmission point are corresponding to a same measurement threshold;
or
there are at least two transmission points corresponding to different measurement thresholds in the first transmission point.

18. The terminal device according to claim 16, wherein the second transmission point comprises any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

19. A network side device, comprising:
a sending module, configured to: in a case that a first serving frequency point of a terminal device is configured with at least two transmission points, send a measurement parameter to the terminal device, wherein
the measurement parameter comprises at least one of a trigger condition parameter and a trigger condition; the trigger condition parameter comprises a measurement threshold corresponding to a first transmission point of the first serving frequency point, and the first transmission point comprises part or all of transmission points of the first serving frequency point; and the trigger condition comprises that a measurement result of a second transmission point of the first serving frequency point is less than or equal to a measurement threshold corresponding to the second transmission point, and the second transmission point comprises part or all of the transmission points of the first serving frequency point.

20. The network side device according to claim 19, wherein all transmission points in the first transmission point are corresponding to a same measurement threshold;
or
there are at least two transmission points corresponding to different measurement thresholds in the first transmission point.

21. The network side device according to claim 19, wherein the second transmission point comprises any one of the following:
any transmission point of the first serving frequency point;
any transmission point in an active state of the first serving frequency point;
all transmission points in an active state of the first serving frequency point;
a specific transmission point of the first serving frequency point; and
all transmission points of the first serving frequency point.

22. A terminal device, comprising a processor, a memory, and a computer program stored in the memory and executable on the processor, wherein when the computer program is executed by the processor, steps of the measurement method according to any one of claims 1 to 9 are implemented.

23. A network side device, comprising a processor, a memory, and a computer program stored in the memory and executable on the processor, wherein when the computer program is executed by the processor, steps of the measurement method according to any one of claims 10 to 15 are implemented.

24. A computer-readable storage medium, wherein the computer-readable storage medium stores a computer program, and when the computer program is executed by a processor, steps of the measurement method according to any one of claims 1 to 9 are implemented, or steps of the measurement method according to any one of claims 10 to 15 are implemented.

25. A computer program product, wherein the computer program product is stored in a computer-readable storage medium, and when the computer program product is executed by at least one processor, steps of the measurement method according to any one of claims 1 to 9 are implemented, or steps of the measurement method according to any one of claims 10 to 15 are implemented.

26. A terminal device, wherein the terminal device is configured to implement steps of the measurement method according to any one of claims 1 to 9.

27. A network side device, wherein the network side device is configured to implement steps of the measurement method according to any one of claims 10 to 15.
